# FASCICULE DE BREVET EUROPEEN

(11) **EP 1 630 531 B1**
(45) Date de publication et mention de la délivrance du brevet: **06.05.2009**
(21) Numéro de dépôt: 05300534.4
(22) Date de dépôt: 30.06.2005
(51) Int. Cl.: G01J 5/00

(54) **Composant de détection de rayonnements électromagnétiques, et notamment infrarouge, bloc optique d'imagerie infrarouge intégrant un tel composant et procédé pour sa réalisation**
Bauelement zur Detektion elektromagnetischer Strahlung, insbesondere Infrarot, optische Baugruppe für Infrarotabbildung mit integriertem solchen Bauelement und dessen Herstellungsverfahren
Component for the detection of electromagnetic radiation, in particular infrared, optical block for infrared imaging integrating said component and fabrication procedure thereof

(30) Priorité: 24.08.2004 FR 0409055
(43) Date de publication de la demande: 01.03.2006
(73) Titulaire: ULIS, 38113 Veurey Voroize (FR)
(72) Inventeur: Tinnes, Sébastien, 38210 Tullins (FR)
(74) Mandataire: Vuillermoz, Bruno

(56) Documents cités:
- US-A- 4 451 735
- US-A- 5 317 157
- US-A1- 2002 175 284

## Description

L'invention concerne de manière générale un composant de détection de rayonnement électromagnétique, et notamment infrarouge, plus particulièrement destiné à être utilisé en qualité de composants optiques d'imagerie, de tels composants étant par exemple positionnés au sein d'une caméra infrarouge, fonctionnant à température ambiante.

Au sein de tels composants, il peut être requis un vide plus ou moins poussé, afin de permettre un fonctionnement correct du ou des détecteurs mis en oeuvre, et donc corollairement de pouvoir disposer de données fiables, outre d'accroître la précision des mesures réalisées ou des scènes détectées.

Ainsi, il est fréquent qu'une pression inférieure à 10⁻² millibars soit nécessaire au bon fonctionnement d'un tel détecteur. Ceux-ci sont donc encapsulés dans une enceinte hermétique, au sein de laquelle, le vide requis à été réalisé. Cependant, il est bien connu qu'après scellement du boîtier d'encapsulation autour du ou des détecteurs, définissant de la sorte une enceinte sous vide ou sous pression réduite, on observe des phénomènes de relargage de molécules de gaz adsorbées à la surface des différents constituants présents au sein de l'enceinte, ou dissoute dans les toutes premières couches du ou des substrats sur lequel ou lesquels sont rapportés les constituants en question. Ces gaz sont principalement constitués d'hydrogène, d'oxygène, de dioxyde de carbone et de vapeur d'eau. Ce faisant, on affecte de manière assez significative le vide présent dans l'enceinte lors de la constitution de composant de détection, et corollairement, les propriétés et performances d'un tel composant.

Afin de lutter contre ces phénomènes, il est bien connu d'intégrer au sein de l'enceinte en question un matériau susceptible d'absorber, et de manière générale de pomper les molécules de gaz ainsi relarguées. Un tel matériau, dénommé sous l'expression en langue anglaise « getter », agit ainsi en quelque sorte comme une pompe.

L'invention a donc plus particulièrement trait au mode de mise en place d'un tel getter au sein d'un composant optique de détection ou d'imagerie, ainsi qu'au procédé correspondant, permettant la révélation des propriétés dudit getter tout en sauvegardant l'intégrité des composants et autres détecteurs contenus dans l'enceinte sous vide ou sous pression réduite.

Dans le domaine de l'imagerie infrarouge, on utilise couramment des détecteurs thermiques, notamment agencés sous forme matricielle, susceptibles de fonctionner à température ambiante, c'est à dire ne nécessitant pas de refroidissement à très basse température, ou des détecteurs quantiques, dont le fonctionnement nécessite la mise en froid à une température voisine de celle de l'azote liquide.

Les détecteurs non refroidis sont classiquement constitués de détecteurs bolométriques ou microbolométriques, dont on mesure la variation de résistivité électrique qui elle-même dépend de la variation de température des scènes détectées.

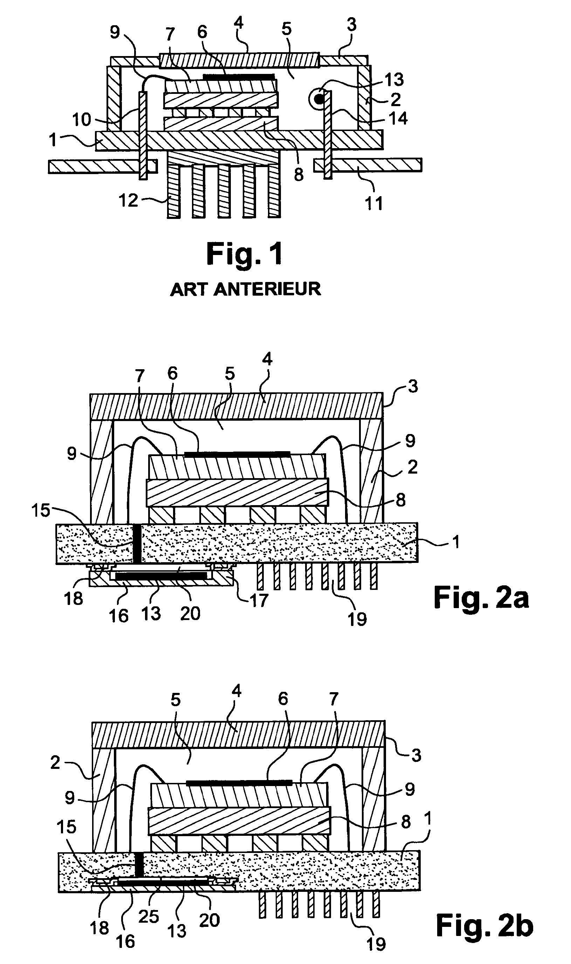

On a représenté, en relation avec la figure 1, une vue schématique d'un boîtier d'encapsulation d'un détecteur bolométrique, conforme à l'art antérieur. Celui-ci comporte fondamentalement un substrat (1), réalisé en un matériau céramique ou en métal, voire en une combinaison de ces deux types de matériau. Ce substrat constitue la base ou support du boîtier. Il est muni de parois latérales (2), et est obturé de manière étanche au moyen d'un couvercle (3), intégrant principalement une fenêtre (4), transparente au rayonnement à détecter, en l'espèce infrarouge, et par exemple transparente au rayonnement de longueurs d'onde comprises entre 8 à 12 micromètres. Une enceinte ou cavité (5) est donc définie, au sein de laquelle est susceptible de régner le vide ou une pression faible, et typiquement une pression inférieure à 10⁻² millibars. Le scellement des éléments définissant cette enceinte (5) est réalisé d'une façon telle, que le taux de fuite est inférieur à 10⁻¹² mbar.l/S à l'hélium.

Au sein de cette enceinte, le substrat (1) reçoit, de manière fondamentale, le détecteur proprement dit, positionné en dessous de la fenêtre (4), et constitué en l'espèce d'un microbolomètre (6) associé à un circuit de connectique (7), l'ensemble étant associé à un module thermoélectrique (8), solidarisé au substrat (1) par exemple par brasage ou par collage epoxy. Ce module est destiné à assurer une régulation de la température, afin notamment de faire fonction de référence, compte tenu de la variable analysée par le détecteur (6), et partant, afin de garantir une certaine reproductibilité des mesures effectuées.

L'assemblage microbolomètre sur un circuit de connectique (6, 7) est en outre connectée électriquement à l'extérieur au moyen d'une connexion câblage filaire (9) associée à une entrée/sortie standard (10), traversant ledit substrat, et reliée à l'électronique du dispositif dans lequel il est intégré, par exemple d'une caméra, au moyen d'un circuit d'interconnexion et d'exploitation (11).

La chaleur produite par le module thermoélectrique (8) est dissipée au moyen d'un radiateur (12), plaqué contre la surface inférieure du substrat (1), sensiblement à l'aplomb dudit module.

Afin de conserver le vide au sein de l'enceinte (5), et ainsi que déjà indiqué, on intègre au sein de celle-ci un getter (13), relié à une entrée électrique de puissance (14), traversant le substrat (1), et également reliée au circuit d'interconnexion (11).

Afin de rendre ce *« getter* » opérationnel, il est nécessaire avant scellement du boîtier, d'effectuer une première opération d'activation dudit getter, propre à révéler ses propriétés de pompage des gaz susceptibles d'être ultérieurement relargués dans l'enceinte ou cavité (5) par les différents éléments contenus dans celle-ci.

Cette première activation est désignée dans la suite de la description activation préalable. Elle est fondamentalement différente des réactivations ultérieures, classiquement pratiquées sur boîtier scellé, et qui selon la présente invention ne s'avèrent plus nécessaires.

Cette étape d'activation du getter s'effectue par chauffage de la zone du boîtier intégrant le getter, à une température comprise classiquement entre 300 et 900° C. Cet échauffement est obtenu par différents moyens, notamment chauffage par induction de courant (radiofréquence), mais le plus fréquemment en déposant le composant non scellé dans une enceinte chauffée et sous vide.

Fréquemment, dans les dispositifs de l'art antérieur, le matériau constitutif du getter est fritté sur un support résistif constitué d'un fil ou d'une bande métallique. Dans ce cas, l'activation dudit getter est réalisée par effet joule, en faisant passer un courant électrique suffisamment important dans ledit support, afin de provoquer son échauffement à la température voulue, et par conduction thermique, l'échauffement du matériau getter.

Les avantages inhérents à la mise en oeuvre d'un tel mode de chauffage sont les suivants :
- possibilité d'obtenir l'activation complète du matériau getter et donc une capacité de pompage maximale de celui-ci ;
- possibilité de réactiver le getter pendant la vie du produit, dans la mesure où le support résistif au sein duquel transite le courant émerge hors du boîtier ;
- bénéfice d'une durée d'activation courte, de l'ordre de quelques minutes ;
- échauffement localisé au seul matériau getter.

En revanche, la mise en oeuvre de ce mode d'activation présente un certain nombre d'inconvénients, affectant en grande partie les avantages précités. Parmi ceux-ci, on peut citer :
- l'encombrement : le matériau getter est placé dans le boîtier, au voisinage du composant ou détecteur, ce qui augmente donc la surface du boîtier, nécessaire pour contenir tous les éléments utiles à son fonctionnement ;
- la nécessité de mettre en oeuvre des passages électriques de puissance au travers du boîtier : en effet, le courant d'activation du getter est de l'ordre de 2 à 5 ampères ;
- l'émission, lors de l'activation du matériau getter d'un rayonnement thermique (notamment pour des températures supérieures à 500°C). Celui-ci peut endommager ou modifier les caractéristiques des détecteurs, notamment microbolométriques.

Lorsque le matériau getter est activé par effet thermique, le boîtier ou son couvercle, selon le lieu de positionnement dudit getter est chauffé jusqu'à la température d'activation de celui-ci pendant l'étape de scellement ou de fermeture sous vide du boîtier.

Cependant, on se heurte dans ce cas à un facteur limitant, constitué par la température supportable par le couvercle (équipé de la fenêtre transparente au rayonnement à détecter), par le boîtier, équipé du module thermoélectrique, voire par la température de fusion des brasures d'assemblage du couvercle sur le boîtier, cette température n'excédant pas en général 300°C.

En d'autres termes, l'activation du getter effectuée pendant la phase de scellement ne peut dépasser la température supportable par les éléments constitutifs du boîtier. Une telle température est donc loin d'être optimum pour l'activation du getter, qui, ainsi que déjà indiqué, est susceptible de supporter des valeurs de température nettement plus élevées. Cette activation incomplète du getter se traduit pas des propriétés de pompage beaucoup plus limitées dans le temps, et donc corollairement, une durée de vie du composant dans son ensemble également plus réduite.

Certes, ce procédé d'activation présente l'avantage de diminuer le coût en relation avec la durée de manipulation pour réaliser l'activation du getter. En revanche, et ainsi qu'on l'aura compris, il s'accompagne des inconvénients suivants :
- tout d'abord une activation partielle du matériau getter conduisant, ainsi que déjà dit, à une durée de vie plus faible du composant ;
- l'absence de réactivation possible en cours de cycle de vie dudit composant ;
- un encombrement encore plus important du boîtier, car afin d'aboutir à une capacité équivalente à celle d'un getter activé par effet joule, il est nécessaire de disposer d'un volume getter plus important, pour ainsi compenser cette activation partielle, et disposer des capacités de pompage équivalentes ;
- et enfin, une durée d'activation plus longue (6 à 18 heures), qui conditionne le cycle de scellement et réduit les capacités des machines de pompage.

En résumé, quel que soit le mode d'activation envisagé du getter, celui-ci est de toute façon toujours intégré au sein du boîtier au voisinage du détecteur proprement dit, ce qui augmente la surface du boîtier d'encapsulation, et corollairement, s'oppose à la miniaturisation du composant de détection, qui constitue un objectif permanent dans le domaine considéré.

On a proposé dans le document US-A-5 420 419 une caméra infrarouge mettant en oeuvre des détecteurs bolométriques, dont la cavité que les reçoit est en communication avec un tube de pompage des gaz résiduels recevant un getter. Un tel tube s'avère particulièrement encombrant, et peu compatible avec la miniaturisation recherchée dans le cadre de la mise au point de tels détecteurs.

L'objectif de la présente invention est de proposer un composant de détection encapsulé, et notamment un composant optique d'imagerie, permettant de réduire notablement l'encombrement du boîtier d'encapsulation dans le plan du détecteur proprement. Elle vise également un procédé correspondant, qui permette de réaliser, lors de l'étape de scellement du boîtier d'encapsulation, une activation thermique suffisante du getter, sans endommager les éléments sensibles à la température, et notamment le ou les détecteurs, notamment bolométriques est mis en oeuvre.

Ce composant de détection de rayonnements électromagnétiques, et notamment de rayonnements infrarouges, comprend une enceinte sous vide ou sous pression réduite, dite enceinte primaire, dont l'une des faces est constituée par une fenêtre transparente au rayonnement à détecter, au moins un détecteur proprement dit, positionné à l'intérieur de ladite enceinte, sensiblement en regard de la fenêtre transparente, et un moyen de pompage de gaz résiduels, destiné à maintenir à un niveau acceptable le vide au sein de ladite enceinte. Il se caractérise par les caractéristiques de la revendication 1.

En d'autres termes, l'invention consiste à séparer spatialement la fonction de détection proprement dite de la fonction assurant le maintien du vide au sein de l'enceinte au sein de laquelle se trouve le détecteur assurant cette détection, tout en préservant de toute détérioration ou de diminution de leur propriétés intrinsèques les composants assurant les fonctions de détection sensibles à la température.
Selon l'invention, les deux enceintes, respectivement primaire et secondaire, communiquent l'une avec l'autre par un ou plusieurs orifices dits de pompage, réalisés au sein du substrat constitutif du support du ou des détecteurs.
Selon une première forme de réalisation de l'invention, l'enceinte secondaire est réalisée au sein même dudit substrat, par creusement d'une cavité de forme et de dimensions adaptées, obturée par brasage par le support du matériau getter.
Selon une autre forme de réalisation de l'invention, le getter est mis en place au sein d'un support secondaire, soudé par brasage à la face inférieure dudit substrat.

L'invention concerne également le procédé de réalisation du scellement du boîtier d'encapsulation du composant, et notamment d'activation du getter qu'il est destiné à contenir, tel que defini dans la revendication 8.

Ce procédé consiste :
- tout d'abord à procéder à un chauffage différencié sous vide ou sous pression réduite, d'une part, d'une première partie comportant au sein d'une enceinte ou cavité primaire, un substrat et le ou les détecteurs thermiques, notamment microbolométriques associés à un module thermo-électrique, et d'autre part, d'une seconde partie, constituée par le support du getter, respectivement à une température assurant le dégazage optimum des différents éléments contenus dans ladite première partie et à une température supérieure à la température précédente, assurant l'activation préalable thermique optimale en une durée réduite du getter contenu dans ladite seconde partie,
- puis à soumettre les deux parties à une température propre à assurer le scellement de l'une sur l'autre ;
- et enfin, à mettre en contact les deux parties au niveau de leur lieu de coopération prévu à cet effet, et corollairement assurer leur solidarisation de manière étanche l'une avec l'autre.

Selon le procédé de l'invention, les deux parties présentent au niveau de leur lieu de coopération une zone annulaire formant saillie, comportant les éléments nécessaires pour réaliser une brasure. Ce faisant, le procédé de l'invention comporte en outre une étape consistant à augmenter la température des deux parties, afin de réaliser une refusion de la brasure, avant ou pendant la mise en contact des deux parties l'une avec l'autre.

La manière dont l'invention peut être réalisée et les avantages qui en découlent ressortiront mieux des exemples de réalisation qui suivent, donnés à titre indicatif et non limitatif à l'appui des figures annexées.
La figure 1, est comme déjà dit, une représentation schématique en section d'un dispositif de l'art antérieur.
Les figures 2a et 2b sont des représentations schématiques en section de deux formes de réalisation différentes de la présente invention.
Les figures 3a et 3b sont des représentations schématiques, respectivement en section et vue du dessous, de la première partie du composant conforme à l'invention.
Les figures 4a et 4b sont des représentations schématiques, respectivement en section et vue du dessus de la seconde partie du composant conforme à l'invention.
La figure 5 est un diagramme illustrant la variation de température en fonction du temps des deux parties, respectivement des figures 3 et 4, conformément au procédé de la présente invention.
La figure 6 est une représentation schématique en section d'une forme particulière de réalisation de l'invention.

L'invention est plus particulièrement décrite en relation avec les détecteurs infrarouges fonctionnant à température ambiante, donc mettant en oeuvre des bolomètres ou microbolomètres. Elle est cependant d'application pour des détecteurs à rayonnements électromagnétiques, et notamment infrarouges refroidis.

On observe ainsi, au sein des figures 2a et 2b deux formes différentes de réalisation de l'invention, qui fonctionnent selon le même principe. Au sein de la figure 2a, on définit deux cavités indépendantes, respectivement :
- une cavité principale ou primaire (5), définie par le substrat (1), les parois latérales (2) et le couvercle (3) intégrant la fenêtre transparente (4), et comprenant le détecteur bolométrique (6) associé à son circuit de connectique (7), outre le module thermoélectrique (8), l'ensemble étant solidarisé au substrat (1),
- et une cavité secondaire (20), constituée d'un support (16) réalisé également en métal, en céramique, ou en un matériau semi-conducteur, un matériau de pompage des gaz résiduels, c'est à dire un getter (13), rapporté sur ledit support (16).

Les deux cavités ainsi définies communiquent librement entre elles au moyen d'un ou de plusieurs orifices de pompage (15), ménagés au sein du substrat (1) de ladite première cavité (5). Bien évidemment, ces orifices (15) sont dimensionnés de telle sorte à assurer une conductance des gaz suffisantes entre la cavité primaire (5), au sein de laquelle les phénomènes de dégazage sont susceptibles d'intervenir, et l'extérieur du boîtier d'encapsulation ainsi défini, et en l'espèce avec la cavité secondaire (20) intégrant le getter (13), et ce, dans un souci d'optimiser l'action de celui-ci, et donc de maintenir le niveau de vide suffisant au sein de la cavité principale. Les dimensions de ces orifices sont déterminées de manière traditionnelle par l'homme du métier, et dépendent, d'une part, de la qualité du vide souhaité au sein de la cavité principale, et d'autre part, de la nature des matériaux mis en oeuvre à l'intérieur de ladite cavité principale.

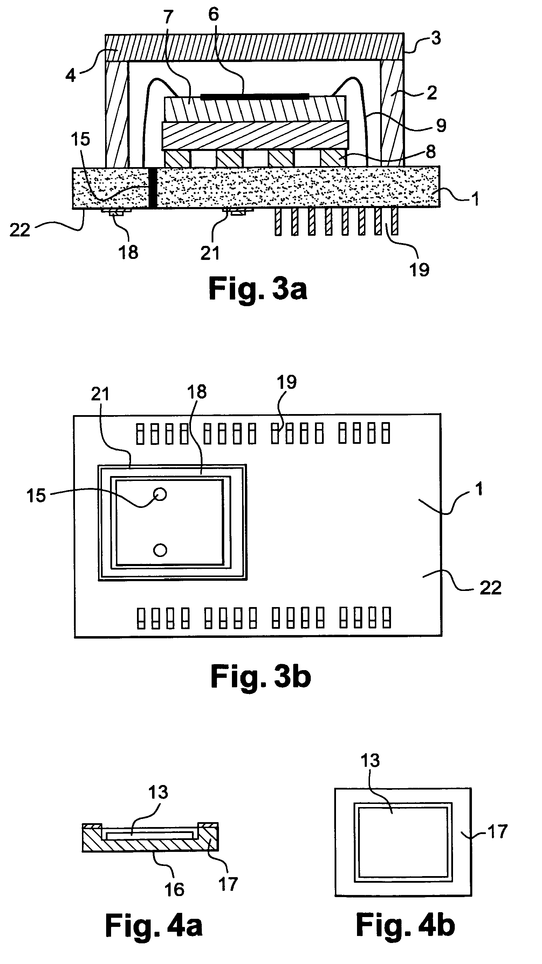

On a mieux représenté en relation avec les figures 3a et 3b les éléments caractéristiques de la cavité principale ou primaire (5). On y a notamment fait figurer les sorties électriques (19) du boîtier, et notamment de la cavité primaire (5). Ces sorties sont connectées électriquement aux pistes métalliques situées à l'intérieur de la cavité, et peuvent être constitués de différents types : pinoches, plages métallisées ou nappes de conducteurs de sortie, mieux connues sous la terminologie anglo-saxonne lead-frames.

Comme indiqué précédemment, les enceintes primaire (5) et secondaire (20) sont solidarisées l'une à l'autre par brasure. A cet effet, on munit la face inférieure (22) du substrat (1) d'un anneau métallique (21), constitué classiquement d'une couche d'accroche, d'une couche barrière et une couche permettant le mouillage d'un alliage de brasure à bas point de fusion (typiquement, une température de fusion inférieure à 250°C).

La couche d'accroche est par exemple constituée de tungstène, de chrome, ou de titane, c'est à dire d'un métal réputé pour sa forte adhérence, et dont le dépôt est réalisé de manière connue par PVD par exemple (selon la terminologie anglo-saxonne Physical Vapor Deposition) ou par sérigraphie.

La couche barrière est également constituée d'un métal, et notamment de nickel ou de platine, connus pour leur bonne étanchéité et leur rôle de barrière de diffusion.

Enfin, la couche de mouillage est classiquement constituée par de l'or.

Bien évidemment, les zones de débouchement des orifices de pompage (15) aboutissent à l'intérieur de la zone définie par cet anneau métallique (21). Corollairement, les sorties électriques (19) de la cavité principale sont localisées à l'extérieur dudit anneau métallisé.

La cavité secondaire (20) (figures 4a et 4b) comporte fondamentalement un support métallique ou céramique, voire semi-conducteur (16), avantageusement bon conducteur thermique.

Ce support (16) présente au niveau de sa périphérie, et éventuellement sur les bords périphériques (17) qui le délimitent (première forme de réalisation de l'invention - figure 2a, 4a, 4b) une zone métallisée, permettant le mouillage d'un alliage de brasure, et dont les dimensions correspondent à celles de l'anneau métallisé (21) mis en place sur la face inférieure (22) du support (1) de la cavité principale.

A l'intérieur de la zone métallisée, est localisé le getter (13), mis en place par dépôt direct sur le substrat constitutif du support (16) ou rapporté sur celui-ci selon les technologiques bien connues par ailleurs, et telles que par exemple décrites dans le document « Chip Level Vacuum Packaging of Micromachines Using NanoGetters » - IEEE transactions on avanced packaging . Vol. 26, N° 3. August 2003 - Douglas R. SPARKS, S. MASSOUD-ANSARI, and Nader NAJAFI.

Il peut être observé, notamment en relation avec la figure 2b que le support (16) peut être entièrement plan. Dans cette forme de réalisation de l'invention, le getter (13) fait saillie par rapport à celui-ci et est reçu dans une cavité ménagée au sein du support (1) constitutif de la cavité principale.

Dans l'autre forme de réalisation (figure 2a), le support présente un rebord périphérique (17), dont la hauteur excède légèrement l'épaisseur du getter.

La réalisation définitive du boîtier conforme à l'invention s'effectue fondamentalement en trois étapes ou phases principales, et met en oeuvre un équipement spécifique, permettant de réaliser un chauffage sous vide des deux cavités ou parties du boîtier à des températures différentes. Un tel équipement peut être par exemple du type *« vacuum wafer bonding system* », tel les modèles de la gamme 500 Electronic Vision Group, Type 520.

En outre et avantageusement, dans l'objectif d'optimiser les coûts de réalisation, on met en oeuvre un tel équipement collectif permettant de sceller plusieurs boîtiers par cycle.

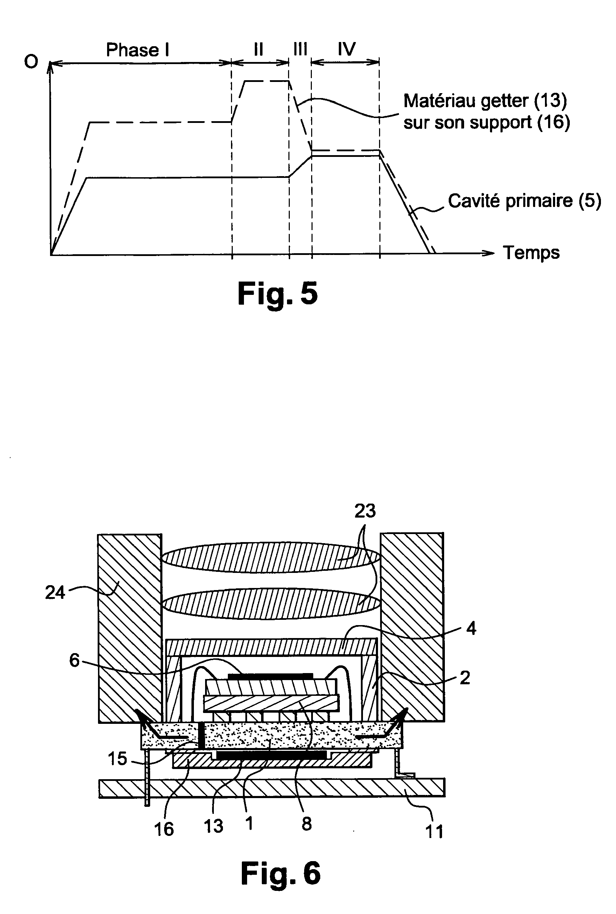

Lors de la première étape (phase I ― figure 5), la cavité primaire (5) et le support (16) muni du getter, sont maintenus séparés l'un de l'autre, afin de permettre la réalisation d'une étape de dégazage de ladite cavité (5) et d'activation du getter (13).

L'étape de dégazage consiste à chauffer sous vide ladite cavité primaire (5) et le support (16), afin d'éliminer au mieux les molécules gazeuses adsorbées à la surface des matériaux ou éléments qui les constituent, ou dissoutes dans les premiers micromètres des matériaux constitutifs du substrat (1), des parois (2), etc, afin d'éviter que ces molécules ne dégazent dans le boîtier après scellement de celui-ci.

S'agissant de la cavité (5), cette étape de dégazage s'effectue à une température, dont la valeur maximum est fixée par le composant qu'elle intègre, thermiquement le plus fragile, et notamment le module thermo-électrique et la brasure. Ainsi, pour ladite cavité primaire (5), cette température de dégazage est typiquement de l'ordre de 150 à 200 °C. En revanche, et ainsi qu'on peut l'observer sur le graphe de la figure 5, cette température est nettement plus élevée pour le support (16).

Puis, on procède à l'étape d'activation préalable du getter (phase II - figure 5). Celle-ci est réalisée par chauffage du support (16) muni du getter (13) à la température préconisée par le fabricant dudit getter, afin d'obtenir une activation optimale de celui-ci en une durée minimale. Une telle température est typiquement de 400 °C à 500 °C, mais en fonction du matériau getter mis en oeuvre, cette température peut être largement supérieure.

Après activation, la température du support (16) est ramenée à la température de fusion de l'alliage de brasure (18) fixé sur l'anneau de brasure (21) du substrat (1), et corollairement, la température de ladite cavité (5) est élevée à cette même température.

L'étape suivante (phase IV - figure 5) consiste alors, toujours dans l'enceinte maintenue sous vide, à mettre en contact la périphérie du support (16) avec la zone définie par l'anneau métallisé (21) revêtue de l'alliage de brasure (18), en respectant la superposition dudit alliage de brasure (21) avec la zone métallisée du support (16), puis à augmenter la température des deux parties du boîtier ainsi en contact, afin de réaliser une refusion de l'alliage de brasure (21).

La température des deux pièces est ensuite ramenée sous la température de fusion de l'alliage de brasure. On aboutit ainsi au scellement des deux parties du boîtier l'une sur l'autre, formant ainsi deux cavités, respectivement primaire (5) et secondaire (20), permettant la communication des gaz entre elles, et créant un volume sous vide avec un getter susceptible d'être totalement activé thermiquement, l'activation préalable ayant été obtenue en une durée limitée, typiquement de 10 minutes à deux heures maximum.

On a représenté en relation avec la figure 6, un mode particulier de réalisation de l'invention. Dans celui-ci, le boîtier de l'invention est destiné à être intégré dans un bloc optique d'un système d'imagerie infrarouge, et notamment d'une caméra.

On a de fait représenté le système optique (23) constitué de différentes lentilles solidarisées aux cloisons latérales (24) réalisées par exemple en aluminium, ledit bloc étant situé au-dessus du composant proprement dit de l'invention. Selon cette application particulière de l'invention, les calories produites par le module thermo-électrique (8) cheminent dans le substrat (1), dont il est rappelé qu'il est avantageusement réalisé en un matériau bon conducteur thermique, pour se dissiper dans la masse thermique importante constituée par lesdites cloisons (24) recevant le bloc optique. Ce faisant, on optimise l'évacuation de la température par la face avant. Ainsi, on peut s'affranchir de la mise en place d'un dissipateur thermique, du type du radiateur (12) représenté sur la figure 1, et corollairement, il n'est plus nécessaire de percer la carte électronique (11) associée au composant, pour laisser ainsi la place à un tel radiateur. On peut donc réaliser de telles cartes électroniques de proximité de plus petites dimensions.

Il ressort de la présente invention un certain nombre d'avantages, parmi lesquels on peut citer la possibilité d'aboutir à une activation préalable optimisée du getter en un laps de temps relativement réduit, sans craindre d'endommager les autres éléments constitutifs du composant de détection. En effet, lors de l'étape d'activation du getter, le rayonnement thermique produit par celui-ci est absorbé ou réfléchi par la face arrière du substrat (1), et ne peut pas atteindre le détecteur bolométrique ou la puce dans laquelle il entre comme constituant et plus particulièrement les microstructures de ladite puce, susceptibles d'être endommagées, ou dont les caractéristiques peuvent évoluer à cause de ce rayonnement.

## Revendications

1. Composant de détection de rayonnements électromagnétiques, et notamment de rayonnements infrarouges, comprenant :
■ une enceinte (5) sous vide ou sous pression réduite, dite enceinte primaire, définie par un substrat (1), des parois latérales (2) et un couvercle (3) intégrant une fenêtre (4) transparente au rayonnement à détecter,
■ au moins un détecteur proprement dit (6), positionné à l'intérieur de ladite enceinte, sensiblement en regard de la fenêtre transparente (4),
■ et un moyen (13) de pompage de gaz résiduels ou getter positionné au sein d'une enceinte secondaire (20), ménagée à l'extérieur de l'enceinte primaire (5), et communiquant librement avec celle-ci, ledit moyen (13) étant destiné à maintenir à un niveau acceptable le vide au sein de ladite enceinte (5),
***caractérisé* en ce que** l'enceinte secondaire (20) est constituée d'un support plan (16) sur lequel le moyen de pompage de gaz résiduels ou getter (13) est rapporté, ledit support étant soudé par brasage sur la face inférieure du substrat (1).

2. Composant de détection de rayonnements électromagnétiques selon la revendication 1, ***caractérisé* en ce que** les deux enceintes, respectivement primaire (5) et secondaire (20) communiquent l'une avec l'autre par un ou plusieurs orifices dits de pompage (15), réalisés au sein du substrat (1) constitutif du support du ou des détecteurs (6).

3. Composant de détection de rayonnements électromagnétiques selon la revendication 2, ***caractérisé* en ce que** l'enceinte secondaire (20) est réalisée au sein même dudit substrat (1), par creusement d'une cavité (25) de forme et de dimensions adaptées, obturée par brasage par le support (16) du matériau getter (13).

4. Composant de détection de rayonnements électromagnétiques selon la revendication 2, ***caractérisé* en ce que** le getter (13) est mis en place au sein d'un support (16), soudé par brasage à la face inférieure (22) dudit substrat (1).

5. Composant de détection de rayonnements électromagnétiques selon l'une des revendications 1 à 4, ***caractérisé* en ce que** le ou les détecteurs sont constitués de bolomètre ou microbolomètre (6) et **en ce que** l'enceinte (5) comporte en outre un module thermoélectrique (8), destiné à assurer une régulation de la température.

6. Bloc optique d'imagerie infrarouge, notamment pour caméra, constitué de différentes lentilles (23) solidarisées aux cloisons latérales (24) dudit bloc, et intégrant un composant de détection de rayonnements électromagnétiques selon l'une des revendications 1 à 4, situé sous lesdits lentilles, ***caractérisé* en ce que** le substrat (1) dudit composant est en contact thermique avec les cloisons latérales (24) du bloc optique.

7. Bloc optique d'imagerie infrarouge selon la revendication 6, ***caractérisé* en ce que** le composant de détection de rayonnements électromagnétiques qu'il intègre est dépourvu de tout radiateur de dissipation de chaleur ou de moyen équivalent.

8. Procédé de réalisation du scellement du boîtier d'encapsulation d'un composant de détection de rayonnement électromagnétique, notamment infrarouge, ***caractérisé* en ce qu'**il consiste :
• tout d'abord à procéder à un chauffage différencié sous vide ou sous pression réduite, d'une part, d'une première partie comportant au sein d'une enceinte ou cavité primaire (5), un substrat (1) et le ou les détecteurs proprement dits (6) dudit rayonnement, et d'autre part, d'une seconde partie, constituée par le support (16) d'un matériau de pompage de gaz résiduels ou getter (13), respectivement à une température assurant le dégazage optimum des différents éléments contenus dans ladite première partie (5) et à une température, supérieure à la température précédente, assurant l'activation préalable thermique optimale en une durée réduite du getter (13) contenu dans ladite seconde partie,
• puis à soumettre les deux parties à une température propre à assurer le scellement de l'une sur l'autre ;
• et enfin, à mettre en contact les deux parties au niveau de leur lieu de coopération prévu à cet effet, et corollairement assurer leur solidarisation de manière étanche l'une avec l'autre.

9. Procédé de réalisation du scellement du boîtier d'encapsulation d'un composant de détection de rayonnement électromagnétique selon la revendication 8, ***caractérisé* en ce que** les deux parties présentent au niveau de leur lieu de coopération une zone annulaire comportant les éléments nécessaires pour réaliser une brasure, et notamment un anneau métallisé, dont l'un au moins est revêtu d'un alliage de brasure.

10. Procédé de réalisation du scellement du boîtier d'encapsulation d'un composant de détection de rayonnement électromagnétique selon la revendication 9, ***caractérisé* en ce qu'**il comporte en outre une étape supplémentaire consistant à augmenter la température des deux parties, afin de réaliser une refusion de l'alliage de brasure, avant ou pendant la mise en contact des deux parties l'une avec l'autre.

## Claims

1. A component for detecting electromagnetic radiation, particularly infrared radiation, comprising :
- a vacuum or low-pressure enclosure (5), called the primary enclosure, defined by a substrate (1), side walls (2) and a lid (3) integrating a window (4) that is transparent to the radiation to be detected,
- at least one actual detector (6), located inside said enclosure substantially opposite the transparent window (4),
- and a means (13) of pumping residual gases or getter, located inside a secondary enclosure (20) arranged outside the primary enclosure (5) and communicating freely with the latter, said means (13) being intended to maintain the vacuum inside said enclosure (5) at an acceptable level ;
***characterised* in that** the secondary enclosure (20) comprises a flat base (16) on which is fixed the means for pumping residual gases or getter (13), said base being soldered onto the lower surface of the substrate (1).

2. A component for detecting electromagnetic radiation as claimed in claim 1, ***characterised* in that** the two enclosures, the primary (5) and secondary (20) enclosure respectively, communicate with each other through one or more pumping ports (15) in the substrate (1) that constitutes the base of the detector(s) (6).

3. A component for detecting electromagnetic radiation as claimed in claim 2, ***characterised* in that** the secondary enclosure (20) is made in said substrate (1) by hollowing out a cavity (25) of appropriate shape and size and closed off by the base (16) for the getter material (13) by soldering.

4. A component for detecting electromagnetic radiation as claimed in claim 2, ***characterised* in that** the getter (13) is placed in a base (16) that is soldered onto the lower surface (22) of said substrate (1).

5. A component for detecting electromagnetic radiation as claimed in any of claims 1 to 4, ***characterised* in that** the detector(s) consist of a bolometer or microbolometer (6) and **in that** enclosure (5) also has a thermoelectric module (8) intended to ensure temperature regulation.

6. An infrared optical imaging unit, especially for a camera, consisting of various lenses (23) attached to lateral partitions (24) of said unit and including a component for detecting electromagnetic radiation as claimed in any of claims 1 to 4 located underneath said lenses, ***characterised* in that** the substrate (1) of said component is in thermal contact with the lateral partitions (24) of the optical unit.

7. An infrared optical imaging unit as claimed in claim 6, ***characterised* in that** the component for detecting electromagnetic radiation which it contains does not have any heat sink to dissipate heat or equivalent means.

8. A process for obtaining sealing of the encapsulation package of a component for detecting electromagnetic radiation, particularly infrared radiation, ***characterised* in that** it involves:
- firstly, differentiated heating in a vacuum or low pressure, on the one hand, of a first part containing, in a primary enclosure or cavity (5), a substrate (1) and the actual detector(s) (6) for said radiation and, on the other hand, of a second part consisting of the base (16) for a material for pumping residual gases or getter (13) to a temperature that ensures optimum degassing of the various elements contained in said first part (5) and to a temperature, in excess of the previous temperature, ensuring optimum thermal preliminary activation of the getter (13) contained in said second part within a relatively short period, respectively;
- then subjecting both parts to a temperature that ensures one part is sealed onto the other part;
- finally, bringing both parts into contact at the location provided for their cooperation and, consequently, joining them to each other with a leaktight joint.

9. A process for obtaining sealing of the encapsulation package of a component for detecting electromagnetic radiation as claimed in claim 8, ***characterised* in that** both parts have a protruding ring-shaped area in the location where they cooperate which has the necessary features to enable soldering, especially a metallised ring, at least one of which is coated with a soldering alloy.

10. A process for obtaining sealing of the encapsulation package of a component for detecting electromagnetic radiation as claimed in claim 9, ***characterised* in that** it also includes an additional stage that involves increasing the temperature of both parts in order to obtain reflow of the soldering alloy before both parts are brought into contact with each other.

## Patentansprüche

1. Bauelement zur Erfassung von elektromagnetischen Strahlungen, und vor allem von Infrarotstrahlungen, Folgendes aufweisend:
■ einen unter Vakuum oder reduziertem Druck stehenden Behälter (5), primärer Behälter genannt, der durch ein Substrat (1), Seitenwände (2) und einen Deckel (3) gebildet ist, in den ein für die zu erfassende Strahlung durchlässiges Fenster (4) integriert ist,
■ mindestens einen eigentlichen Detektor (6), der im Inneren des Behälters, dem durchlässigen Fenster (4) im Wesentlichen zugewandt angeordnet ist,
■ und eine Einrichtung (13) zum Pumpen von Restgasen oder einen Getter, die bzw. der im Inneren eines sekundären Behälters (20) angeordnet ist, der außerhalb des primären Behälters (5) ausgebildet ist und frei mit diesem in Verbindung steht, wobei die Einrichtung (13) dazu bestimmt ist, das Vakuum im Inneren des Behälters (5) auf einem akzeptablen Pegel zu halten,
**dadurch gekennzeichnet, dass** der sekundäre Behälter (20) aus einem ebenen Träger (16) besteht, auf dem die Einrichtung zum Pumpen von Restgasen oder der Getter (13) angebracht ist, wobei der Träger an der Unterseite des Substrats (1) angelötet ist.

2. Bauelement zur Erfassung von elektromagnetischen Strahlungen nach Anspruch 1, **dadurch gekennzeichnet, dass** die beiden Behälter, d.h. der primäre Behälter (5) und der sekundäre Behälter (20), über eine oder mehrere sogenannte Pumpöffnung/en (15) miteinander in Verbindung stehen, die im Inneren des Substrats (1) ausgebildet ist/sind, welches den Träger des Detektors (6) oder der Detektoren (6) bildet.

3. Bauelement zur Erfassung von elektromagnetischen Strahlungen nach Anspruch 2, **dadurch gekennzeichnet, dass** der sekundäre Behälter (20) im Inneren eben dieses Substrats (1) durch Austiefen eines Hohlraums (25) mit angepasster Form und angepassten Abmessungen ausgebildet ist, der durch Anlöten durch den Träger (16) des Gettermaterials (13) verschlossen ist.

4. Bauelement zur Erfassung von elektromagnetischen Strahlungen nach Anspruch 2, **dadurch gekennzeichnet, dass** der Getter (13) im Inneren eines auf der Unterseite (22) des Substrats (1) angelöteten Trägers (16) angebracht ist.

5. Bauelement zur Erfassung von elektromagnetischen Strahlungen nach einem der Ansprüche 1 bis 4, **dadurch gekennzeichnet, dass** der Detektor oder die Detektoren aus einem Bolometer oder Mikrobolometer (6) besteht bzw. bestehen, und dass der Behälter (5) außerdem ein thermoelektrisches Modul (8) aufweist, das dazu bestimmt ist, eine Regelung der Temperatur sicherzustellen.

6. Optischer Infrarot-Bildgebungsblock, insbesondere für eine Kamera, der aus verschiedenen Linsen (23) besteht, die an den Seitenwänden (24) des Blocks befestigt sind, und ein unter den Linsen befindliches Bauelement zur Erfassung von elektromagnetischen Strahlungen nach einem der Ansprüche 1 bis 4 integriert hat, **dadurch gekennzeichnet, dass** das Substrat (1) des Bauelements in Thermokontakt mit den Seitenwänden (24) des optischen Blocks steht.

7. Optischer Infrarot-Bildgebungsblock nach Anspruch 6, **dadurch gekennzeichnet, dass** das Bauelement zur Erfassung von elektromagnetischen Strahlungen, das in ihn integriert ist, über keinerlei Wärmeableitungskühlkörper oder eine gleichwertige Einrichtung verfügt.

8. Verfahren zur Ausbildung der Vergussverbindung des Einkapselungsgehäuses eines Bauelements zur Erfassung von elektromagnetischer Strahlung, insbesondere von Infrarotstrahlung, **dadurch gekennzeichnet, dass** es darin besteht:
• zunächst eine differenzierte Erwärmung unter Vakuum oder unter reduziertem Druck einerseits eines ersten Teils, das im Inneren eines primären Gehäuses oder Hohlraums (5) ein Substrat (1) und den oder die eigentlichen Detektor/en (6) der Strahlung aufweist, und andererseits eines zweiten Teils, das aus dem Träger (16) eines Materials zum Pumpen von Restgasen oder eines Getters (13) besteht, jeweils auf eine Temperatur, welche die optimale Entgasung der verschiedenen, im ersten Teil (5) enthaltenen Elemente sicherstellt, und auf eine Temperatur vorzunehmen, die höher ist als die vorhergehende Temperatur, welche die vorläufige optimale thermische Aktivierung des im zweiten Teil enthaltenen Getters (13) in einem verkürzten Zeitraum sicherstellt,
• dann die beiden Teile einer Temperatur auszusetzen, die geeignet ist, um die Vergussverbindung des einen am anderen sicherzustellen;
• und schließlich die beiden Teile im Bereich ihrer zu diesem Zweck vorgesehenen Kooperationsstelle in Kontakt zu bringen und in der Folge ihre Befestigung aneinander auf dichte Weise sicherzustellen.

9. Verfahren zur Ausbildung der Vergussverbindung des Einkapselungsgehäuses eines Bauelements zur Erfassung von elektromagnetischer Strahlung nach Anspruch 8, **dadurch gekennzeichnet, dass** die beiden Teile im Bereich ihrer Kooperationsstelle einen ringförmigen Bereich, der die zur Herstellung einer Lötverbindung notwendigen Elemente umfasst, und insbesondere einen metallisierten Ring aufweisen, wovon zumindest einer mit einer Lötlegierung beschichtet ist.

10. Verfahren zur Ausbildung der Vergussverbindung des Einkapselungsgehäuses eines Bauelements zur Erfassung von elektromagnetischer Strahlung nach Anspruch 9, **dadurch gekennzeichnet, dass** es außerdem einen zusätzlichen Schritt umfasst, der darin besteht, die Temperatur der beiden Teile zu erhöhen, um ein Aufschmelzen der Lötlegierung zu bewirken, bevor oder während die beiden Teile miteinander in Kontakt gebracht werden.
